# FASCICULE DE BREVET EUROPEEN

(11) **EP 1 958 834 B1**
(45) Date de publication et mention de la délivrance du brevet: **21.04.2010**
(21) Numéro de dépôt: 08101480.5
(22) Date de dépôt: 11.02.2008
(51) Int. Cl.: B60T 11/20

(54) **Procédé de montage/démontage d'un maître-cylindre de frein**
Montageverfahren und Demontageverfahren eines Hauptbremszylinders
Assembling and disassembling method for a master brake cylinder

(30) Priorité: 16.02.2007 FR 0701188
(43) Date de publication de la demande: 20.08.2008
(73) Titulaire: ROBERT BOSCH GMBH, 70442 Stuttgart (DE)
(72) Inventeur: Bourlon, Philippe, 77230, Dammartin en Goele (FR); Bourgois, Lionel, 95360, Montmagny (FR)
(74) Mandataire: Hurwic, Aleksander Wiktor

(56) Documents cités:
- WO-A-97/22505
- DE-A1- 10 005 743
- JP-A- 2004 291 933

## Description

L'invention concerne un procédé de montage et de démontage d'un maître cylindre de frein de véhicule et notamment de maître cylindre destiné à être monté sur un servomoteur d'assistance au freinage d'un véhicule automobile.

Les maîtres cylindres connus dans la technique, par exemple décrits dans DE 100 05 743 et WO 97/22505 comportent un ressort, appelé ressort secondaire, situé dans l'alésage entre le fond de l'alésage et le piston secondaire. Ce ressort a pour rôle de repousser le piston secondaire vers le piston primaire et donc de repousser l'ensemble piston secondaire/piston primaire vers l'entrée de l'alésage.

Lorsque le maître cylindre n'est pas monté sur le servomoteur d'assistance au freinage, ce ressort a donc tendance à repousser l'ensemble piston primaire/piston secondaire vers l'extérieur de l'alésage du maître cylindre.

Lorsqu'on démonte le maître cylindre, il y a un risque que ce ressort éjecte l'ensemble du mécanisme du maître cylindre vers l'extérieur de celui-ci. Il y a donc un risque de détérioration des pièce intérieures du maître cylindre ou de la perte de certaines d'entre-elles.

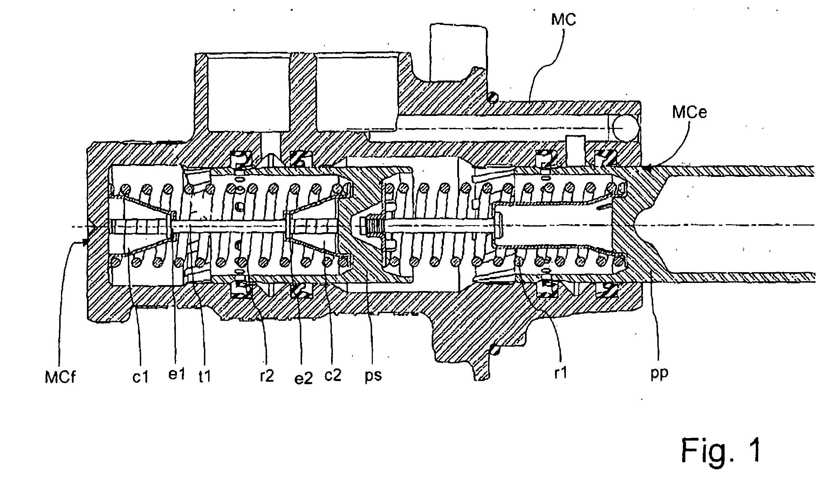

Pour éviter cela, selon une technique connue, le ressort secondaire est muni d'un mécanisme de limitation de sa course. La figure 1 représente un exemple d'un tel dispositif. L'alésage axial du maître cylindre contient les pistons primaire pp et secondaire ps de manière connue dans la technique. Un ressort primaire r1 est intercalé entre les deux pistons. Un ressort secondaire r2 est intercalé entre le piston secondaire ps et le fond MCf de l'alésage du maître cylindre. L'ensemble est inséré dans l'alésage du maître cylindre par l'entrée MCe de l'alésage. Le ressort rs2 prend appuie sur le fond MCf de l'alésage et tend à repousser les pistons vers l'extérieur de l'alésage.

Dans le système de la figure 1, la course du ressort secondaire r2 est limitée par deux coupelles c1 et c2 qui coulissent sur une tige t1. La tige t1 est munie de deux épaulements e1 et e2 qui empêchent les coupelles de s'écarter l'une de l'autre d'une distance maximale. Ce système permet ainsi de limiter la course du ressort secondaire r2.

L'invention concerne un système permettant de s'affranchir d'un tel dispositif de limitation de la course du ressort secondaire.

Elle fournit donc un maître cylindre simplifié par rapport aux maîtres cylindres de l'art antérieur.

L'invention concerne un procédé de montage et de démontage d'un maître cylindre lequel comprend un piston primaire et un piston secondaire montés dans un alésage du maître cylindre avec au moins un ressort placé entre le fond de l'alésage et le piston secondaire et ayant pour rôle de repousser le piston secondaire et le piston primaire vers l'entrée de l'alésage. Selon l'invention, le ressort secondaire est libre et le procédé comprend au moins l'étape suivante:
- mise en place d'une goupille de maintien temporaire dans un trou d'accès situé sur la périphérie du maître cylindre de telle façon que la goupille émerge à l'intérieur de l'alésage entre l'entrée de l'alésage et l'un des pistons primaire ou secondaire. Avantageusement, cette goupille est mise en place temporairement.

Avantageusement, selon le procédé de l'invention ladite goupille de maintien est mise en place temporairement dans ledit trou d'accès durant le temps de montage du maître cylindre sur un servomoteur d'assistance au freinage.

De préférence, ledit trou d'accès est un trou de communication de la pression de freinage entre le maître cylindre et un circuit hydraulique de freinage, ou un trou d'alimentation en liquide de freinage du maître cylindre.

Avantageusement, ledit trou d'accès est un trou de communication de la pression de freinage entre le maître cylindre et un circuit hydraulique de freinage.

Selon une forme de réalisation préférée de l'invention, ledit trou d'accès est situé entre le piston secondaire et l'entrée de l'alésage de telle façon que la goupille émerge à l'intérieur de l'alésage entre l'entrée de l'alésage et le piston secondaire.

Selon une forme de réalisation la goupille est en matériau plastique rigide.

En ce qui concerne la réalisation de la goupille, on pourra prévoir que le diamètre d'une partie de la goupille soit sensiblement égal au diamètre d'une partie du trou d'accès de façon à permettre l'insertion de la goupille dans ledit trou avec frottement sur cette partie du trou d'accès.

Avantageusement, le diamètre d'une partie de la goupille est inférieur à celui d'une partie du trou d'accès et comporte, sur sa périphérie, des éléments en forme de protubérances permettant un frottement sur les parois intérieures de cette partie du trou d'accès.

On pourra prévoir également que la goupille comporte une extrémité conique permettant son insertion dans le trou d'accès.

Selon une autre forme de réalisation de l'invention, le trou d'accès possède un filetage et la goupille comporte une partie filetée permettant le vissage de la goupille dans le filetage dudit trou d'accès.

Selon le procédé de l'invention, lors d'un montage d'un maître cylindre sur un servomoteur d'assistance au freinage, on peut prévoir les étapes suivantes:
- mise en place des pistons primaire et secondaire ainsi que de leurs ressorts associés dans l'alésage du maître cylindre,
- compression des ressorts,
- mise en place de la goupille de maintien,
- montage du maître cylindre sur un servomoteur d'assistance au freinage,
- retrait de la goupille de maintien.

Lors d'un démontage d'un maître cylindre on peut prévoir les étapes suivantes:
- mise en place de la goupille de maintien,
- démontage du maître cylindre du servomoteur d'assistance au freinage sur lequel il est fixé.

Les différents objets et caractéristiques de l'invention apparaîtront plus clairement dans la description et dans les figures annexées qui représentent:
- la figure 1, une coupe longitudinale d'un maître cylindre connu dans la technique et décrit précédemment,
- la figure 2a, une coupe longitudinale d'un exemple de réalisation d'un système permettant de mettre en oeuvre le procédé de l'invention,
- la figure 2b, une coupe transversale de l'exemple de réalisation de la figure 2a,
- la figures 3a, une vue de côté d'un exemple de réalisation de la goupille permettant de mettre en oeuvre le procédé de l'invention,
- la figure 3b, une vue en coupe de la goupille de la figure 3a,
- les figures 3c et 3d, des vues de côté de variantes de réalisations de la goupille selon l'invention.

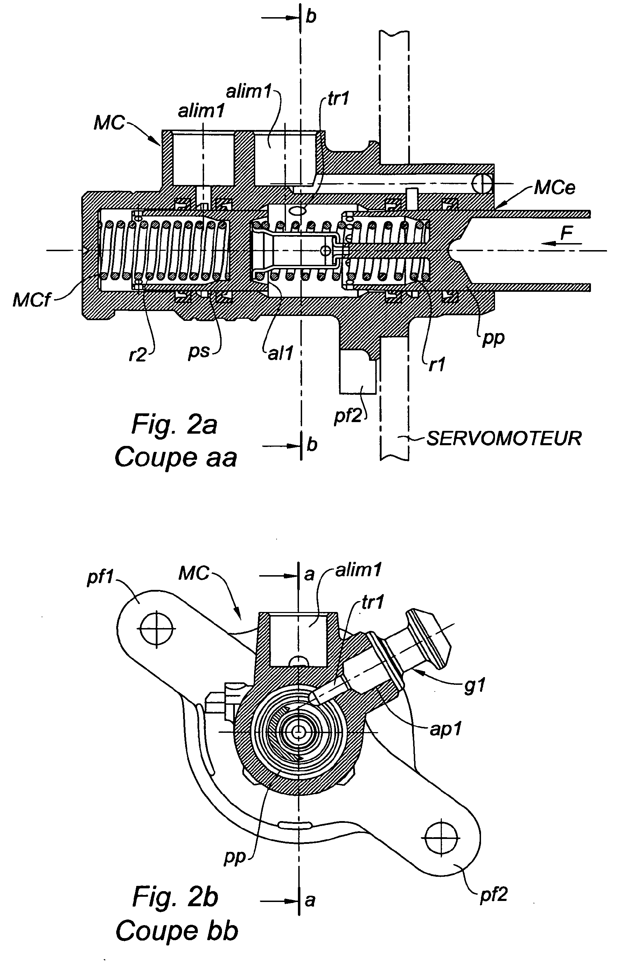

La figure 2a représente en coupe aa un maître cylindre auquel s'applique le procédé de l'invention et la figure 2b en représente une vue en coupe bb. Pour simplifier, on a référencé sur ces figures, de la même façon que sur la figure 1, les mêmes éléments qu'on trouve à la fois sur la figure 1 et sur les figures 2a et 2b.

Sur la figure 2a, on retrouve donc un maître cylindre de frein MC possédant un alésage al1 dans lequel ont été placés les pistons primaire pp et secondaire ps avec les ressorts primaire r1 et secondaire r2. On trouve deux accès d'alimentation en liquide de frein alim1 et alim2 auxquels doit être raccordé un réservoir de liquide de frein. On trouve également un trou de communication tr1 destiné à communiquer la pression de freinage exercée, par le piston primaire, dans le maître cylindre vers un circuit hydraulique de freinage.

Par ailleurs, des pattes de fixation pf1 et pf2 permettent de fixer le maître cylindre MC sur un servomoteur d'assistance au freinage représenté en pointillés sur la figure 2a.

La figure 2b représente une coupe bb réalisée selon l'axe de ce trou tr1. Ce trou tr1 communique avec un accès ap1 destiné à être connecté à un circuit de freinage.

Sur cette figure 2b, une goupille g1 a été placée dans le trou tr1 et débouche dans l'alésage al1. Lorsque les deux pistons sont montés dans l'alésage dans la position représentée sur la figure 2b, la goupille g1 débouche donc dans l'alésage entre les deux pistons pp et ps. La goupille g1 interdit donc au piston secondaire de reculer, au-delà de la goupille g1, vers l'entrée MCe de l'alésage du maître cylindre.

Le procédé de l'invention consiste donc, lors du démontage ou du montage du maître cylindre sur le servomoteur, à placer une goupille temporaire g1 dans le trou d'accès tr1 pour empêcher les pistons pp et ps de ressortir de l'alésage du maître cylindre.

Le procédé de montage du maître cylindre comporte donc les étapes suivantes:
- étape 1: mise en place des pistons primaire et secondaire pp et ps ainsi que des ressorts r1 et r2 dans l'alésage al1 du maître cylindre,
- étape 2: compression des ressorts r1 et r2 par pression sur le piston primaire selon la flèche F de façon à mettre les piston dans une position sensiblement telle que le piston secondaire ps soit au-delà du trou tr1 par rapport à l'entrée de l'alésage al1 comme cela est représenté sur la figure 2b,
- étape 3: mise en place de la goupille de maintien temporaire g1 dans le trou tr1,
- étape 4: montage du maître cylindre sur un servomoteur d'assistance au freinage et fixation à l'aide des pattes pf1 et pf2,
- étape 5: retrait de la goupille de maintien temporaire g1.

Le maître cylindre se trouve ainsi monté sur le servomoteur. Avant la fixation sur le servomoteur, la manutention réalisée entre l'étape 3 et l'étape 4 s'est donc faite en toute sécurité sans le risque que les pistons sortent de l'alésage du maître cylindre. Après avoir retiré la goupille, il ne reste plus qu'à connecter les circuits hydrauliques de freinage aux accès de pression tel que l'accès ap1 et à monter le réservoir de liquide de freins sur les accès alim1 et alim2.

Le procédé de démontage du maître cylindre consiste, après avoir déconnecté le circuit hydraulique de l'accès ap1, à introduire la goupille g1 dans le trou tr1. L'extrémité de la goupille émerge dans l'alésage al1, les pistons ne peuvent donc plus sortir de l'alésage al1. Le maître cylindre MC peut être désolidarisé en tout sécurité du servomoteur d'assistance au freinage.

Dans la description qui précède on a considéré le cas où la goupille est insérée dans un trou (tr1) du maître cylindre permettant de faire communiquer l'intérieur de l'alésage du maître cylindre avec un circuit hydraulique de freinage. Sans sortir du cadre de l'invention, on peut prévoir que cette goupille est insérée dans un trou de communication (alim1 ou alim2) avec le réservoir de liquide de frein dans la mesure où un tel trou de communication débouche dans l'alésage du maître cylindre dans une zone qui permette à la goupille d'empêcher aux pistons de sortir de l'alésage du maître cylindre.

On peut également prévoir que la goupille est insérée dans un trou spécialement prévu à cet usage. Dans ce cas on prévoira de pouvoir boucher ce trou, avec un bouchon fileté, par exemple, lorsqu'on aura enlevé la goupille et avant de mettre le maître cylindre en service.

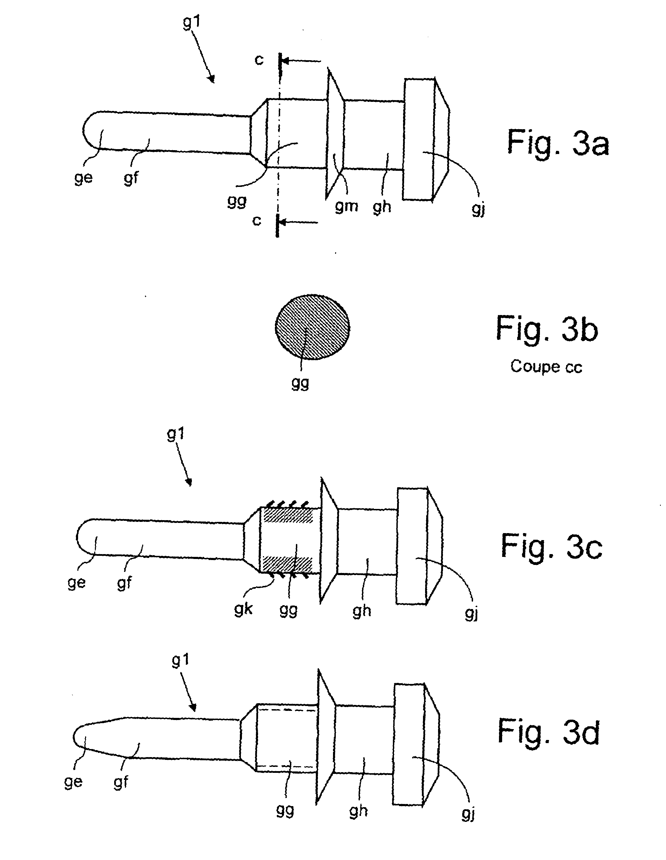

En se reportant aux figures 3a à 3d on va maintenant décrire différentes formes de réalisation possibles de la goupille g1.

Cette goupille comporte une tige gf destinée à être insérée dans le trou tr1 du maître cylindre et dont l'extrémité ge doit émerger à l'intérieur de l'alésage al1. Le diamètre de la tige g1 est inférieur au diamètre du trou tr1. La tige gf est prolongée par une partie de maintien gg de la goupille et destinée à pénétrer dans l'accès ap1 du maître cylindre.

Selon un premier mode de réalisation, cette partie de maintien gg possède un diamètre sensiblement égal ou très légèrement inférieur au diamètre de l'accès ap1 de façon qu'elle pénètre avec frottement dans l'accès ap1 et que la goupille se maintienne en place dans le maître cylindre en raison de ce frottement.

Selon un autre mode de réalisation représenté par la coupe cc de la figure 2b, le diamètre de la partie de maintien gg est inférieure au diamètre de l'accès ap1, et la surface périphérique de cette partie gg comporte des protubérance qui seront en contact avec la surface intérieure de l'accès ap1 et maintiendront par frottement la goupille dans le maître cylindre.

La figure 3c représente une variante de réalisation dans laquelle la partie gg comporte des lamelles périphériques gk souples destinées à exercer un frottement sur la paroi intérieur de l'accès ap1.

La figure 3d représente une autre forme de réalisation de la goupille dans la quelle la partie de maintien gg comporte un filetage destinée à être vissée dans un filetage intérieur de l'accès ap1.

Par ailleurs, dans ces différentes formes de réalisations, l'extrémité ge de la tige gf peut être conique comme cela est représenté sur la figure 3d. Cette disposition facilitera l'insertion de la goupille dans le trou tr1.

De plus, la partie de maintien gg peut comporter un épaulement gm permettant de contrôler la profondeur d'insertion de la tige gf dans le trou tr1 du maître cylindre.

La partie de maintien est prolongée par une manette de manutention gh comportant un bossage d'extrémité gi facilitant l'insertion et le retrait de la goupille dans le trou tr1.

## Revendications

1. Procédé de montage/démontage d'un maître cylindre de frein (MC) lequel comprend un piston primaire (pp) et un piston secondaire (ps) montés dans un alésage (al1) du maître cylindre avec au moins un ressort (r2) placé entre le fond (MCf) de l'alésage et le piston secondaire (ps) et ayant pour rôle de repousser le piston secondaire (ps) et le piston primaire (pp) vers l'entrée (MCe) de l'alésage, **caractérisé en ce que** le ressort secondaire (r2) est libre et **en ce que** le procédé comprend au moins l'étape suivante:
- mise en place d'une goupille de maintien temporaire (g1) dans un trou d'accès (tr1) situé sur la périphérie du maître cylindre (MC) de telle façon que la goupille (g1) émerge à l'intérieur de l'alésage (al1) entre l'entrée (MCe) de l'alésage et l'un des pistons primaire ou secondaire (pp. ou ps).

2. Procédé de montage/démontage d'un maître cylindre selon la revendication 1, **caractérisé en ce que** ladite goupille de maintien (g1) est mise en place temporairement dans ledit trou d'accès (tr1) durant le temps de montage du maître cylindre sur un servomoteur d'assistance au freinage.

3. Procédé de montage/démontage d'un maître cylindre selon l'une des revendications 1 ou 2, **caractérisé en ce que** ledit trou d'accès est un trou de communication de la pression de freinage entre le maître cylindre et un circuit hydraulique de freinage, ou un trou d'alimentation en liquide de freinage du maître cylindre.

4. Procédé de montage/démontage d'un maître cylindre selon la revendication 3, **caractérisé en ce que** ledit trou d'accès est un trou de communication de la pression de freinage entre le maître cylindre et un circuit hydraulique de freinage.

5. Procédé de montage/démontage d'un maître cylindre selon la revendication 4, **caractérisé en ce que** ledit trou d'accès est situé entre le piston secondaire (ps) et l'entrée (MCe) de l'alésage, de telle façon que la goupille (g1) émerge à l'intérieur de l'alésage (al1) entre l'entrée (MCe) de l'alésage et le piston secondaire (ps).

6. Procédé de montage/démontage d'un maître cylindre selon l'une des revendications précédentes, **caractérisé en ce que** la goupille est en matériau plastique rigide.

7. Procédé de montage/démontage d'un maître cylindre selon l'une des revendications précédentes, **caractérisé en ce que** le diamètre d'une partie (gg) de la goupille est sensiblement égal au diamètre d'une partie du trou d'accès (ap1) de façon à permettre son insertion dans ledit trou avec frottement sur cette partie (ap1) du trou d'accès.

8. Procédé de montage/démontage d'un maître cylindre selon l'une des revendications 1 à 6, **caractérisé en ce que** le diamètre d'une partie (gg) de la goupille est inférieur à celui d'une partie (ap1) du trou d'accès et comporte, sur sa périphérie, des éléments en forme de protubérances permettant un frottement sur les parois intérieures de cette partie (ap1) du trou d'accès.

9. Procédé de montage/démontage d'un maître cylindre selon l'une des revendications 1 à 6, **caractérisé en ce que** le trou d'accès possède un filetage et **en ce que** la goupille (g1) comporte une partie filetée permettant le vissage de la goupille dans le filetage dudit trou d'accès.

10. Procédé de montage/démontage d'un maître cylindre selon l'une des revendications précédentes, **caractérisé en ce que** la goupille (g1) comporte une extrémité conique (ge) permettant son insertion dans le trou d'accès.

11. Procédé de montage/démontage d'un maître cylindre selon l'une quelconque des revendication précédentes, **caractérisé en ce qu'**il comporte, lors d'un montage d'un maître cylindre sur un servomoteur d'assistance au freinage, les étapes suivantes:
- la mise en place des pistons primaire et secondaire ainsi que de leurs ressorts associés dans l'alésage du maître cylindre,
- la compression des ressorts,
- la mise en place de la goupille de maintien,
- le montage du maître cylindre sur un servomoteur d'assistance au freinage,
- le retrait de la goupille de maintien.

12. Procédé de montage/démontage d'un maître cylindre selon l'une quelconque des revendication 1 à 10, **caractérisé en ce qu'**il comporte, lors d'un démontage d'un maître cylindre, les étapes suivantes:
- la mise en place de la goupille de maintien,
- le démontage du maître cylindre du servomoteur d'assistance au freinage sur lequel il est fixé.

## Claims

1. Method for fitting/removing a brake master cylinder (MC) which comprises a primary piston (pp) and a secondary piston (ps) which are mounted in a barrel (al1) of the master cylinder with at least one spring (r2) placed between the bottom (MCf) of the barrel and the secondary piston (ps) and having the function of pushing back the secondary piston (ps) and the primary piston (pp) toward the mouth (MCe) of the barrel, **characterized in that** the secondary spring (r2) is free and **in that** the method comprises at least the following step:
- installation of a temporary retaining pin (g1) in an access hole (tr1) located on the periphery of the master cylinder (MC) so that the pin (g1) emerges inside the barrel (al1) between the mouth (MCe) of the barrel and either the primary or the secondary piston (pp or ps).

2. Method for fitting/removing a master cylinder according to Claim 1, **characterized in that** the said retaining pin (g1) is installed temporarily in the said access hole (tr1) while the master cylinder is being fitted to a braking assistance servo unit.

3. Method for fitting/removing a master cylinder according to either of Claims 1 or 2, **characterized in that** the said access hole is a braking pressure communicating hole between the master cylinder and a hydraulic braking circuit, or a hole for supplying the master cylinder with brake fluid.

4. Method for fitting/removing a master cylinder according to Claim 3, **characterized in that** the said access hole is a braking pressure communicating hole between the master cylinder and a hydraulic braking circuit.

5. Method for fitting/removing a master cylinder according to Claim 4, **characterized in that** the said access hole is located between the secondary piston (ps) and the mouth (MCe) of the barrel, so that the pin (g1) emerges inside the barrel (al1) between the mouth (MCe) of the barrel and the secondary piston (ps).

6. Method for fitting/removing a master cylinder according to one of the preceding claims, **characterized in that** the pin is made of rigid plastic.

7. Method for fitting/removing a master cylinder according to one of the preceding claims, **characterized in that** the diameter of a portion (gg) of the pin is generally equal to the diameter of a portion of the access hole (ap1) so as to allow its insertion in the said hole with friction contact on this portion (ap1) of the access hole.

8. Method for fitting/removing a master cylinder according to one of Claims 1 to 6, **characterized in that** the diameter of a portion (gg) of the pin is less than that of a portion (ap1) of the access hole and includes, on its periphery, elements in the form of protuberances allowing a friction contact on the inside walls of this portion (ap1) of the access hole.

9. Method for fitting/removing a master cylinder according to one of Claims 1 to 6, **characterized in that** the access hole has a thread and **in that** the pin (g1) includes a threaded portion allowing the pin to be screwed into the thread of the said access hole.

10. Method for fitting/removing a master cylinder according to one of the preceding claims, **characterized in that** the pin (g1) includes a tapered end (ge) allowing its insertion in the access hole.

11. Method for fitting/removing a master cylinder according to any one of the preceding claims, **characterized in that** it includes, when fitting a master cylinder to a braking assistance servo unit, the following steps:
- the installation of the primary and secondary pistons and their associated springs in the barrel of the master cylinder;
- the compression of the springs;
- the installation of the retaining pin;
- the fitting of the master cylinder to a braking assistance servo unit;
- the withdrawal of the retaining pin.

12. Method for fitting/removing a master cylinder according to any one of Claims 1 to 10, **characterized in that** it includes, when removing a master cylinder, the following steps:
- the installation of the retaining pin;
- the removal of the master cylinder from the braking assistance servo unit on which it is mounted.

## Patentansprüche

1. Verfahren zur Montage/Demontage eines Hauptbremszylinders (MC), der einen Primärkolben (pp) und einen Sekundärkolben (ps) aufweist, die in einer Bohrung (al1) des Hauptzylinders angebracht sind, wobei mindestens eine Feder (r2) zwischen dem Boden (MCf) der Bohrung und dem Sekundärkolben (ps) angeordnet ist, die dazu dient, den Sekundärkolben (ps) und den Primärkolben (pp) zum Eintritt (MCe) der Bohrung zu drücken, **dadurch gekennzeichnet, dass** die Sekundärfeder (r2) frei ist und das Verfahren zumindest den nachfolgenden Schritt umfasst:
- Anordnen eines Stifts (g1) zum vorübergehenden Halten in einer Zugangsöffnung (tr1), die sich am Umfang des Hauptzylinders (MC) befindet, so dass der Stift (g1) in die Bohrung (al1) zwischen dem Eintritt (MCe) der Bohrung und dem Primärkolben oder Sekundärkolben (pp oder ps) hineinragt.

2. Verfahren zur Montage/Demontage eines Hauptzylinders nach Anspruch 1, **dadurch gekennzeichnet, dass** der Haltestift (g1) während der Zeit, in der der Hauptzylinder an einem Servomotor zur Bremsunterstützung montiert wird, vorübergehend in der Zugangsöffnung (tr1) angeordnet wird.

3. Verfahren zur Montage/Demontage eines Hauptzylinders nach Anspruch 1 oder 2, **dadurch gekennzeichnet, dass** die Zugangsöffnung eine Öffnung zur Übertragung des Bremsdrucks zwischen dem Hauptzylinder und einem hydraulischen Bremskreis oder eine Öffnung zur Versorgung des Hauptzylinders mit Bremsflüssigkeit ist.

4. Verfahren zur Montage/Demontage eines Hauptzylinders nach Anspruch 3, **dadurch gekennzeichnet, dass** die Zugangsöffnung eine Öffnung zur Übertragung des Bremsdrucks zwischen dem Hauptzylinder und einem hydraulischen Bremskreis ist.

5. Verfahren zur Montage/Demontage eines Hauptzylinders nach Anspruch 4, **dadurch gekennzeichnet, dass** die Zugangsöffnung so zwischen dem Sekundärkolben (ps) und dem Eintritt (MCe) der Bohrung liegt, dass der Stift (g1) in die Bohrung (al1) zwischen dem Eintritt (MCe) der Bohrung und dem Sekundärkolben (ps) hineinragt.

6. Verfahren zur Montage/Demontage eines Hauptzylinders nach einem der vorhergehenden Ansprüche, **dadurch gekennzeichnet, dass** der Stift aus starrem Kunststoffmaterial besteht.

7. Verfahren zur Montage/Demontage eines Hauptzylinders nach einem der vorhergehenden Ansprüche, **dadurch gekennzeichnet, dass** der Durchmesser eines Abschnitts (gg) des Stifts im Wesentlichen dem Durchmesser eines Abschnitts (ap1) der Zugangsöffnung entspricht, so dass er mit Reibung an diesem Abschnitt (ap1) der Zugangsöffnung in die Öffnung eingesetzt werden kann.

8. Verfahren zur Montage/Demontage eines Hauptzylinders nach einem der Ansprüche 1 bis 6, **dadurch gekennzeichnet, dass** der Durchmesser eines Abschnitts (gg) des Stifts kleiner ist als derjenige eines Abschnitts (ap1) der Zugangsöffnung und an seinem Umfang Elemente in Form von Vorsprüngen aufweist, die eine Reibung an den Innenwänden dieses Abschnitts (ap1) der Zugangsöffnung ermöglichen.

9. Verfahren zur Montage/Demontage eines Hauptzylinders nach einem der Ansprüche 1 bis 6, **dadurch gekennzeichnet, dass** die Zugangsöffnung ein Gewinde und der Stift (g1) einen Gewindeabschnitt aufweist, der das Einschrauben des Stifts in das Gewinde der Zugangsöffnung ermöglicht.

10. Verfahren zur Montage/Demontage eines Hauptzylinders nach einem der vorhergehenden Ansprüche, **dadurch gekennzeichnet, dass** der Stift (g1) ein konisches Ende (ge) aufweist, das das Einsetzen des Stifts in die Zugangsöffnung ermöglicht.

11. Verfahren zur Montage/Demontage eines Hauptzylinders nach einem der vorhergehenden Ansprüche, **dadurch gekennzeichnet, dass** es bei einer Montage eines Hauptzylinders an einem Servomotor zur Bremsunterstützung die folgenden Schritte umfasst:
- Anordnen des Primärkolbens und des Sekundärkolbens und ihrer zugeordneten Federn in der Bohrung des Hauptzylinders,
- Komprimieren der Federn,
- Anordnen des Haltestifts,
- Anbringen des Hauptzylinders an einem Servomotor zur Bremsunterstützung,
- Entfernen des Haltestifts.

12. Verfahren zur Montage/Demontage eines Hauptzylinders nach einem der Ansprüche 1 bis 10, **dadurch gekennzeichnet, dass** es bei einer Demontage eines Hauptzylinders die folgenden Schritte umfasst:
- Anordnen des Haltestifts,
- Demontieren des Hauptzylinders von dem Servomotor zur Bremsunterstützung, an dem er befestigt ist.
